# EUROPÄISCHE PATENTSCHRIFT

(11) **EP 2 506 503 B1**
(45) Veröffentlichungstag und Bekanntmachung des Hinweises auf die Patenterteilung: **05.03.2014**
(21) Anmeldenummer: 11160655.4
(22) Anmeldetag: 31.03.2011
(51) Int. Cl.: H04L 12/46, H04L 29/06, G05B 19/042

(54) **Automatisierungsnetzwerk mit Leitsystemkomponente**
Automation network with control system components
Réseau d'automatisation doté de composants de système de gestion

(43) Veröffentlichungstag der Anmeldung: 03.10.2012
(73) Patentinhaber: Siemens Aktiengesellschaft, 80333 München (DE)
(72) Erfinder: Bernhard, Rene, 91052, Erlangen (DE); Köbinger, Franz, 90475, Nürnberg (DE)

(56) Entgegenhaltungen:
- EP-A1- 1 715 395
- US-A1- 2004 030 438
- US-B1- 7 779 461

## Beschreibung

Die Erfindung betrifft ein Automatisierungsnetzwerk, insbesondere die Einrichtung von Tunnelendpunkten in einer Leitsystemkomponente des Automatisierungsnetzwerks.

Aus dem Stand der Technik sind Leitsystemkomponenten von Automatisierungsnetzwerken bekannt, die zur Steuerung des Produktionsprozesses und zur Kontrolle des Produktionsprozesses, der durch das Automatisierungsnetzwerk durchgeführt wird, dienen. Der Produktionsprozess wird durch Netzwerkgeräte des Automatisierungsnetzwerks durchgeführt. Eine Steuerung steuert dabei die Netzwerkgeräte. Die Steuerung kann von der Leitsystemkomponente aus durch einen Benutzer bedient werden. Außerdem kann die Leitsystemkomponente dazu benutzt werden, die Funktionsweise des Automatisierungsnetzwerks zu überwachen und zu kontrollieren.

Aus US 7 779 461 ist ein Netzwerk mit mehreren Netzwerkgeräten bekannt, zwischen denen VPN-Tunnel aufgebaut werden, wobei jedem Tunnel ein Netzwerkgerät zugeordnet ist. In den Tunneln werden Daten übertragen, die als Pakete, Cells, Datagramme, Fragmente von Paketen oder als andere Typen von Daten vorliegen können.

Demgegenüber liegt der Erfindung die Aufgabe zugrunde, ein verbessertes Verfahren zum Empfang von Daten durch eine Leitsystemkomponente in einem Automatisierungsnetzwerk, eine verbesserte Leitsystemkomponente, ein verbessertes Automatisierungsnetzwerk und ein verbessertes Computerprogrammprodukt zu schaffen.

Die Aufgabe der Erfindung wird mit den unabhängigen Patentansprüchen gelöst. Ausführungsformen der Erfindung sind in den abhängigen Patentansprüchen gegeben.

Die Erfindung betrifft ein Verfahren zum Empfang von Daten durch eine Leitsystemkomponente in einem Automatisierungsnetzwerk. Zunächst werden mehrere Tunnel zu Netzwerkgeräten eines Teilnetzwerks des Automatisierungsnetzwerks von der Leitsystemkomponente eingerichtet. Jeder Tunnel umfasst einen ersten Endpunkt in der Leitsystemkomponente und einen zweiten Endpunkt in genau einem der Netzwerkgeräte. Jeder Tunnel verbindet also eines der Netzwerkgeräte mit der Leitsystemkomponente. Die Tunnel können durch mehrere breitere Netzwerkgeräte des Automatisierungsnetzwerks verlaufen. Beispielsweise kann ein Tunnel von der Leitsystemkomponente über einen Netzwerkknoten A und einen Netzwerkknoten B zu einem Netzwerkgerät C führen. Auch ein direkter Tunnel zwischen der Leitsystemkomponente A und einem Netzwerkgerät D ist möglich. Das Teilnetzwerk besteht aus allen Netzwerkgeräten, die über einen Tunnel mit der Leitsystemkomponente verbunden sind. Die Tunnel können zum Beispiel Tunnel eines virtuellen privaten Netzwerks (VPN) sein.

Die Leitsystemkomponente ordnet jedem Tunnel ein an diesen Tunnel angeschlossenes Netzwerkgerät zu. Hierfür wird eine Adresse dieses Netzwerkgeräts verwendet. Beispielsweise kann hierfür die sogenannte Medium Access Control-Adresse (MAC) oder eine Adresse des Internetprotokolls (IP) verwendet werden. Die Netzwerkkomponente kann also mehrere Tunnel zu mehreren Netzwerkgeräten aufbauen. Dabei wird jedem Tunnel mittels der Adresse das daran angeschlossene Netzwerkgerät zugeordnet. Somit wird vermieden, dass Daten, die an ein erstes Netzwerkgerät gesendet werden sollen, über den falschen Tunnel an ein zweites Netzwerkgerät gesendet werden. Beispielsweise kann in der Leitsystemkomponente eine Tabelle angelegt werden, in der jedem Tunnel die Adresse des zugehörigen Netzwerkgeräts zugeordnet ist. Tunnel A kann beispielsweise die Adresse 1 und Tunnel B die Adresse 2 zugeordnet sein.

Die Netzwerkgeräte des Automatisierungsnetzwerks sind außerdem ebenfalls dazu ausgebildet, mehrere Tunnel zu mehreren Netzwerkgeräten des Automatisierungsnetzwerks einzurichten.

Die Datenübertragung innerhalb des Teilnetzwerks erfolgt durch die Tunnel. Außerdem erfolgt die Datenübertragung mittels eines ersten Protokolls innerhalb einer Datenstruktur des ersten Protokolls durch die Tunnel. Das erste Protokoll ermöglicht ein Routing der Daten in dem Netzwerk. Beispielsweise kann das erste Protokoll das sogenannte Internetprotokoll (IP) sein. Die Datenstruktur des ersten Protokolls können Pakete, sogenannte IP-Pakete, sein.

In der Datenstruktur des ersten Protokolls sind die Daten verpackt. Nach dem Empfang der Daten werden die Daten aus der Datenstruktur entpackt. Die Daten weisen nach dem Entpacken keine Routinginformationen für ein Routing in dem Netzwerk auf. Dies kann beispielsweise dann der Fall sein, wenn es sich um Daten eines Protokolls nach Layer2 des OSI-Schichtmodells handelt. Layer2-Protokolle werden vor allem zur Kommunikation in sogenannten Hochverfügbarkeits-Automatisierungsnetzwerken verwendet.

Ein Automatisierungsnetzwerk kann z.B. als industrielles Automatisierungsnetzwerk ausgebildet sein. Solche industriellen Automatisierungsnetzwerke können z.B. zur Steuerung und/oder Regelung von industriellen Anlagen (z.B. Produktionsanlagen, Förderanlagen usw.), Maschinen und/oder Geräten ausgebildet, eingerichtet und/oder vorgesehen sein. Insbesondere können Automatisierungsnetzwerke bzw. industrielle Automatisierungsnetzwerke Echzeit-Kommunikationsprotokolle (z.B. Profinet, Profibus, Real-Time-Ethernet)zur Kommunikation zumindest zwischen den an den Steuerungs- und/oder Regelungsaufgaben beteiligten Komponenten (z.B. zwischen den Steuerungseinheiten (102) und den zu steuernden Anlagen und/oder Maschinen) aufweisen. Die sichere Übertragung von Daten über Speichermedien ist ebenfalls abgedeckt.

Weiterhin kann neben einem Echtzeit-Kommunikationsprotokoll aber auch noch mindestens ein weiteres Kommunikationsprotokoll (das z.B. nicht echtzeitfähig zu sein braucht) in dem Automatisierungsnetzwerk bzw. industriellen Automatisierungsnetzwerk vorgesehen sein, z.B. zum Überwachen, Einrichten, Umprogrammieren oder/oder Umparametrieren einer oder mehrerer Steuerungseinheiten (102) im Automatisierungsnetzwerk.

Ein Automatisierungsnetzwerk kann z.B. drahtgebundene Kommunikationskomponenten und/oder drahtlose Kommunikationskomponenten umfassen. Außerdem kann ein Automatisierungsnetzwerk zumindest eine Automatisierungseinrichtung umfassen.

Eine Automatisierungseinrichtung kann beispielsweise ein Computer, PC und/oder Controller mit Steuerungs-Aufgaben bzw. Steuerungs-Fähigkeiten sein. Insbesondere kann eine Automatisierungseinrichtung beispielsweise eine industrielle Automatisierungseinrichtung sein, die z.B. speziell zur Steuerung und/oder Regelung industrieller Anlagen ausgebildet, eingerichtet und/oder vorgesehen sein kann. Insbesondere können solche Automatisierungseinrichtungen bzw. industriellen Automatisierungseinrichtungen echtzeitfähig sein, d.h. eine Steuerung bzw. Regelung in Echtzeit ermöglichen. Dazu kann die Automatisierungseinrichtung bzw. die industrielle Automatisierungseinrichtung z.B. ein Echtzeitbetriebssystem umfassen und/oder zumindest unter anderem ein echtzeitfähiges Kommunikationsprotokoll zur Kommunikation (z.B. Profinet, Profibus, Real-Time-Ethernet) unterstützen.

Ein Automatisierungsnetzwerk umfasst mehrere Sensoren und Aktuatoren. Die Aktuatoren und Sensoren werden von zumindest einer Steuerungseinrichtung gesteuert. Die Aktuatoren, die Sensoren und die zumindest eine Steuerungseinrichtung tauschen Daten miteinander aus. Zum Datenaustausch wird ein Automatisierungsprotokoll verwendet. Die zumindest eine Steuerungseinrichtung steuert die Aktuatoren, die Sensoren und den Datenaustausch so, dass ein maschineller Fertigungsprozess abläuft, in dem z.B. ein Produkt hergestellt wird.

Eine industrielle Automatisierungseinrichtung kann z.B. eine speicherprogrammierbare Steuerung, ein Modul oder Teil einer speicherprogrammierbaren Steuerung, eine in einem Computer oder PC integrierte speicherprogrammierbare Steuerung sowie entsprechende Feldgeräte, Sensoren und/oder Aktoren, Ein-und/oder Ausgabegeräte oder Ähnliches zum Anschluss an einer speicherprogrammierbare Steuerung sein oder solche umfassen.

Als Automatisierungsprotokoll im Sinne der vorliegenden Erfindung wird jede Art von Protokoll verstanden, das zur Kommunikation mit Automatisierungs-Einrichtungen gemäß der vorliegenden Beschreibung vorgesehen, geeignet und/oder eingerichtet ist. Solche Automatisierungsprotokolle können beispielsweise das Profi-Bus-Protokoll (z. B. gemäß IEC 61158/EN50170), ein Profi-Bus-DP-Protokoll, ein Profi-Bus-PA-Protokoll, ein Profi-Net-Protokoll, ein Profi-Net-IO-Protokoll, ein Protokoll gemäß AS-Interface, ein Protokoll gemäß IO-Link, ein KNX-Protokoll, ein Protokoll gemäß einer Mehrpunkt-Schnittstelle (Multipoint-Interface, MPI), ein Protokoll für eine Punkt-zu-Punkt-Kopplung (Point-to-Point, PtP), ein Protokoll gemäß den Spezifikationen der S7-Kommunikation (welches beispielsweise zur Kommunikation von speicherprogrammierbaren Steuerungen der Firma Siemens vorgesehen und eingerichtet ist) oder auch ein Industrial-Ethernet-Protokoll oder Real-Time-Ethernt-Protokoll bzw. weitere spezifische Protokolle für die Kommunikation mit Automatisierungsgeräten sein. Als Automatisierungsprotokoll im Sinne der vorliegenden Beschreibung können auch beliebige Kombinationen der vorgenannten Protokolle vorgesehen sein.

Die Daten werden also durch die Tunnel mittels des ersten Protokolls gesendet und empfangen. Da das erste Protokoll zum Senden und Empfangen verwendet wird, können die Daten innerhalb des Netzwerks geroutet werden. Ein Routing der Daten, wenn sie sich wie im Stand der Technik nicht innerhalb der Datenstruktur des ersten Protokolls befinden, ist in dem Automatisierungsnetzwerk nicht möglich.

Nach Ausführungsformen der Erfindung sind die Daten Daten eines zweiten Protokolls und das zweite Protokoll ist für eine Hochverfügbarkeits-Kommunikation innerhalb des Automatisierungsnetzwerks ausgebildet.

Nach Ausführungsformen der Erfindung ist das zweite Protokoll ein Protokoll der zweiten Schicht des OSI-Schichtmodells. Die Verpackung von Daten des zweiten Protokolls der zweiten Schicht (Layer 2) des OSI-Schichtmodells in das erste Protokoll ist vorteilhaft, da so für das zweite Protokoll die Tunnel eingerichtet werden können und die Daten routingfähig werden, da sie sich in der Datenstruktur des ersten Protokolls befinden. Das erste Protokoll ist nach Ausführungsformen der Erfindung ein Protokoll der dritten Schicht (Layer 3) des OSI-Schichtmodells.

Nach Ausführungsformen der Erfindung ist das Netzwerkgerät, in dem sich der andere Tunnelendpunkt befindet, eine Steuerungseinheit des Automatisierungsnetzwerks. Die Steuerungseinheit steuert den Produktionsprozess, der durch weitere Netzwerkgeräte des Automatisierungsnetzwerks durchgeführt wird. Die Steuerungseinheit richtet weitere Endpunkte weiterer Tunnel des Teilnetzwerks zu den weiteren Netzwerkgeräten ein, sodass die Kommunikation zwischen den Netzwerkgeräten und der Steuerungseinheit durch die Tunnel innerhalb des Teilnetzwerks erfolgen kann. Die Steuerungseinheit ordnet jedem dieser Tunnel das jeweils an diesen Tunnel angeschlossene Netzwerkgerät unter Verwendung zumindest einer Adresse zu. Diese Adresse kann beispielsweise eine IP-Adresse oder eine Medium Access Control-Adresse sein.

Nach Ausführungsformen der Erfindung ist das erste Protokoll ein Internetprotokoll. Die Datenstruktur umfasst Datenpakete. Die Daten werden aus den Datenpaketen entpackt.

Nach Ausführungsformen der Erfindung umfasst das Automatisierungsnetzwerk weitere Leitsystemkomponenten. Jede der Leitsystemkomponenten richtet mehrere Tunnel des Teilnetzwerks ein und ordnet jedem der Tunnel jeweils eine an diesen Tunnel angeschlossene Leitsystemkomponente unter Verwendung zumindest einer Adresse der Leitsystemkomponente zu.

Es können also nach Ausführungsformen der Erfindung sowohl die Steuerungseinheit als auch die Leitsystemkomponenten mehrere Tunnel zu mehreren Netzwerkgeräten und/oder Leitsystemkomponenten aufbauen. Dies ist vorteilhaft, da so die Kommunikation von einer Leitsystemkomponente zur anderen und/oder von einer Leitsystemkomponente zur Steuerung komplett gesichert über den Tunnel erfolgen kann. Hierfür wird ein sicheres Protokoll, zum Beispiel IPsec, verwendet. Somit ist ein Auslesen oder Verändern der Daten nicht möglich. Dies ist insbesondere vorteilhaft, wenn es sich um Hochverfügbarkeitsdaten oder sicherheitsrelevante Daten handelt.

Es wird also der gesamte Weg zwischen der Leitsystemkomponente und der Steuerung und/oder einer anderen Leitsystemkomponente durch den Tunnel gesichert.

In einem weiteren Aspekt betrifft die Erfindung eine Leitsystemkomponente für ein Automatisierungsnetzwerk. Die Leitsystemkomponente weist Mittel zum Einrichten mehrerer Tunnel zu Netzwerkgeräten eines Teilnetzwerks des Automatisierungsnetzwerks auf. Jeder Tunnel umfasst einen ersten Punkt in der Leitsystemkomponente und einen zweiten Endpunkt in genau einem der Netzwerkgeräte. Außerdem weist die Leitsystemkomponente Mittel zur Zuordnung jedes Tunnels zu dem an diesem Tunnel angeschlossenen Netzwerkgerät unter Verwendung zumindest einer Adresse dieses Netzwerkgeräts auf. Ferner umfasst die Leitsystemkomponente Mittel zum Empfang von Daten mittels eines ersten Protokolls innerhalb einer Datenstruktur des ersten Protokolls durch die Tunnel. Das erste Protokoll ermöglicht ein Routing der Daten in dem Netzwerk. Außerdem umfasst die Leitsystemkomponente Mittel zum Entpacken der Daten aus der Datenstruktur. Die Daten umfassen nach dem Entpacken keine Routinginformationen für ein Routing in dem Netzwerk.

Die Leitsystemkomponente dient als Schnittstelle zwischen Benutzer und Automatisierungsnetzwerk. Der Benutzer kann Einstellungen an den Steuereinheiten oder anderen Netzwerkgeräten des Automatisierungsnetzwerks vornehmen oder aber die Funktion des Automatisierungsnetzwerks und/oder des Produktionsprozesses, der durch die Netzwerkgeräte des Automatisierungsnetzwerks durchgeführt wird, kontrollieren.

In noch einem weiteren Aspekt betrifft die Erfindung ein Automatisierungsnetzwerk mit zumindest einer Leitsystemkomponente nach Ausführungsformen der Erfindung.

In noch einem weiteren Aspekt betrifft die Erfindung ein Computerprogrammprodukt mit ausführbaren Instruktionen, wobei die Instruktionen bei Ausführung durch die Leitsystemkomponente die Leitsystemkomponente zur Durchführung eines Verfahrens nach Ausführungsformen der Erfindung veranlassen.

Nachfolgend werden Ausführungsformen der Erfindung anhand der Figuren näher erläutert. Es zeigen:
- Figur 1: eine schematische Ansicht eines Automatisierungs-netzwerks nach Ausführungsformen der Erfindung;
- Figur 2: ein Blockdiagramm einer Leitsystemkomponente nach Ausführungsformen der Erfindung; und
- Figur 3: ein Flussdiagramm eines Verfahrens nach Ausführungsformen der Erfindung.

Elemente der nachfolgenden Figuren, die einander entsprechen, sind mit denselben Bezugszeichen gekennzeichnet.

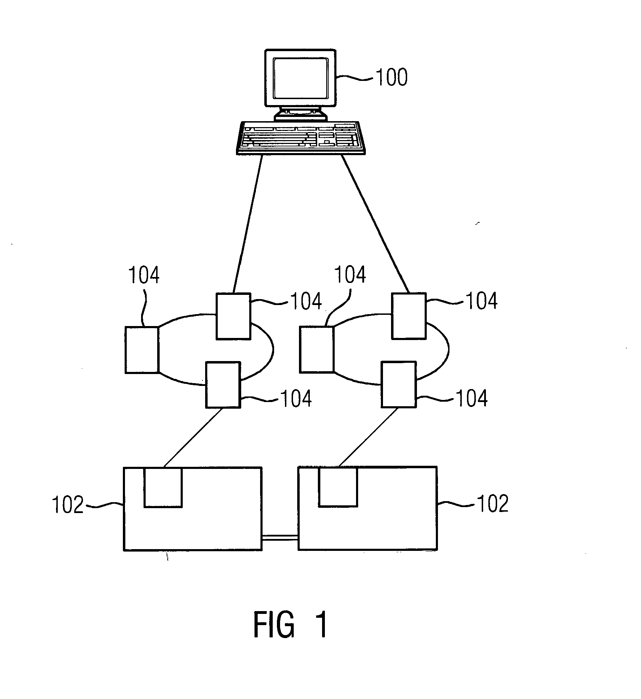

Figur 1 ist eine schematische Ansicht eines Automatisierungsnetzwerks mit einer Leitsystemkomponente 100, zwei Steuerungseinheiten 102 und mehreren Netzwerkknoten 104. Mittels der Leitsystemkomponente 100 kann ein Benutzer auf die Steuerungseinheiten 102 zugreifen. Er kann beispielsweise Funktionen der Steuerungseinheiten 102 überwachen oder Einstellungen vornehmen. Außerdem ist es dem Benutzer möglich, durch Bedienung der Leitsystemkomponente 100 den Produktionsprozess, der durch die Steuerungseinheiten 102 gesteuert wird, zu überwachen. Das Automatisierungsnetzwerk umfasst zwei Steuerungseinheiten 102, da es sich um ein Hochverfügbarkeits-Automatisierungsnetzwerk handelt. Dies bedeutet, dass im Falle eines Ausfalls einer der Steuerungseinheiten 102 die Funktionsweise des Automatisierungsnetzwerks nicht beeinträchtigt wird. Dies wird dadurch erreicht, dass die zweite Steuerungseinheit 102 den Produktionsprozess dann steuert. Die Leitsystemkomponente 100 muss daher mit beiden Steuerungseinheiten 102 verbunden sein, da im Falle eines Ausfalls einer der Steuerungseinheiten 102 auch die andere Steuerungseinheit 102 durch den Benutzer kontrollierbar und steuerbar sein muss.

Damit die Kommunikation innerhalb des Automatisierungsnetzwerks zwischen der Leitsystemkomponente 100 und den Steuerungseinheiten 102 möglichst sicher verläuft, werden Tunnel eines Teilnetzwerks zwischen der Leitsystemkomponente 100 und den Steuerungseinheiten 102 eingerichtet. Es besteht also ein Tunnel zwischen der Leitsystemkomponente 100 und der ersten Steuerungseinheit 102 und ein weiterer Tunnel zwischen der Leitsystemkomponente 100 und der zweiten Steuerungseinheit 102. Die Tunnel verlaufen jeweils über mehrere Netzwerkknoten 104 des Automatisierungsnetzwerks. Hierbei ist wichtig, dass in dem Netzwerkknoten 104 keine Endpunkte der Tunnel vorhanden sind, sodass die Daten nicht in den Netzwerkknoten 104 gelesen oder verändert werden können.

Die Datenübertragung erfolgt mittels eines ersten Protokolls, das ein Routing der Daten innerhalb des Automatisierungsnetzwerks erlaubt. Die Daten an sich sind Daten, die keine Routinginformationen umfassen. Beispielsweise können die Daten Daten eines zweiten Protokolls sein, das im OSI-Schichtmodell in der Layer2-Schicht angeordnet ist. Solche Protokolle werden in Hochverfügbarkeitssystemen verwendet.

Die Steuerungseinheiten 102 wiederum sind miteinander auch mittels eines Tunnels des Teilnetzwerks verbunden. Bei diesem Tunnel und bei den Tunneln zwischen den Steuerungseinheiten 102 und der Leitsystemkomponente 100 kann es sich beispielsweise um Tunnel eines virtuellen privaten Teilnetzwerks handeln.

Die Leitsystemkomponente 100 ist also dazu ausgebildet, mehrere Tunnelendpunkte mehrerer Tunnel einzurichten. Die Zuordnung der Tunnel zu dem jeweiligen Netzwerkgerät, das sich hinter dem Tunnel befindet, erfolgt mittels einer Adresse. In Figur 1 wird beispielsweise der erste Tunnel, der die Leitsystemkomponente 100 mit der ersten Steuerungseinheit 102 verbindet, der IP- oder MAC-Adresse der ersten Steuerungseinheit 102 zugeordnet und der zweite Tunnel wird der IP-Adresse oder der MAC-Adresse der zweiten Steuerungseinheit 102 zugeordnet.

Durch Zuordnung der Adressen der Steuerungseinheiten 102 zu dem jeweiligen Tunnel wird sichergestellt, dass die Daten zur richtigen Steuerungseinheit 102 übertragen werden. Eine fälschliche Datenübertragung an eine der Steuerungseinheiten ist somit ausgeschlossen.

Dadurch, dass die Tunnel von der Leitsystemkomponente 100 bis zu den Steuerungseinheiten 102 verlaufen, wird eine Veränderung der Daten oder ein unberechtigtes Auslesen der Daten verhindert. Dies erhöht die Sicherheit in dem Hochverfügbarkeits-Netzwerk. Die übertragenen Daten an sich sind nicht routingfähig, da es sich um Daten nach einem Protokoll der zweiten Schicht des OSI-Schichtmodells handelt. Das Routing wird dadurch erreicht, dass die Daten in eine Datenstruktur eines ersten Protokolls, zum Beispiel das Internetprotokoll, gepackt werden. Wenn die Daten dann von der Leitsystemkomponente 100 empfangen werden, werden die Daten aus der Datenstruktur entpackt. Beim Senden von Daten von der Leitsystemkomponente 100 zu einer der Steuerungseinheiten 102 werden die Daten durch die Leitsystemkomponente in die Datenstruktur des ersten Protokolls gepackt.

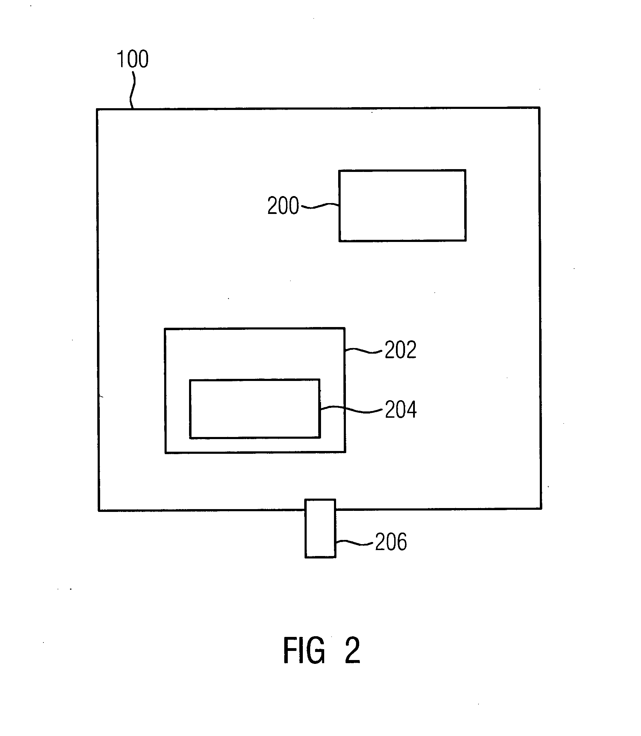

Figur 2 ist ein Blockdiagramm einer Leitsystemkomponente 100. Die Leitsystemkomponente 100 umfasst einen Prozessor 200, eine Speicher 202 und einen Netzwerkanschluss 206. In dem Speicher 202 sind Programminstruktionen 204 gespeichert. Der Prozessor 200 ist zur Ausführung der Instruktionen 204 ausgebildet. Über den Netzwerkanschluss 206 kann die Leitsystemkomponente Daten empfangen und senden. Der Prozessor 200 wird bei Ausführung der Instruktionen 204 dazu veranlasst, über den Netzwerkanschluss 206 einen Tunnel mit zwei Netzwerkgeräten eines Automatisierungsnetzwerks, mit dem die Leitsystemkomponente 100 über den Netzwerkanschluss 206 verbunden ist. Hierzu wird für jeden der Tunnel ein Tunnelendpunkt in der Leitsystemkomponente 100 eingerichtet. Daten können nun durch diesen Tunnel über den Netzwerkanschluss empfangen und gesendet werden. Der Prozessor ist dazu ausgebildet, jedem Tunnel ein an den Tunnel angeschlossenes Netzwerkgerät zuzuordnen. Dies kann beispielsweise eine Steuerungseinheit wie in Figur 1 dargestellt sein. Zur Zuordnung kann beispielsweise eine Datenbank verwendet werden, die ebenfalls in dem Speicher 202 oder in einem anderen Speicher (nicht dargestellt) gespeichert wird. Durch Zuordnung eines Tunnels zu einem Netzwerkgerät unter Verwendung einer Adresse des Netzwerkgeräts wird sichergestellt, dass die Daten über den richtigen Tunnel versendet werden. Mit anderen Worten kann die Leitsystemkomponente 100 durch Zuordnen der Tunnel zu dem jeweiligen Netzwerkgerät auseinanderhalten, an welchem Tunnel welches Netzwerkgerät angeschlossen ist.

Wenn Daten durch die Leitsystemkomponente 100 empfangen werden, veranlassen die Programminstruktionen 204 den Prozessor 200 dazu, die Daten aus einer Datenstruktur eines ersten Protokolls zu entpacken. Die Datenstruktur des ersten Protokolls ermöglicht ein Routing der Daten durch das Automatisierungsnetzwerk. Die Daten an sich sind selbst Daten eines zweiten Protokolls, das nicht routingfähig ist. Das zweite Protokoll wird innerhalb des Automatisierungsnetzwerks für die Hochverfügbarkeits-Kommunikation verwendet.

Beim Senden der Daten packt der Prozessor 200 die Daten in die Datenstruktur des ersten Protokolls, wodurch ein Routing der Daten durch das Automatisierungsnetzwerk durch den Tunnel möglich ist.

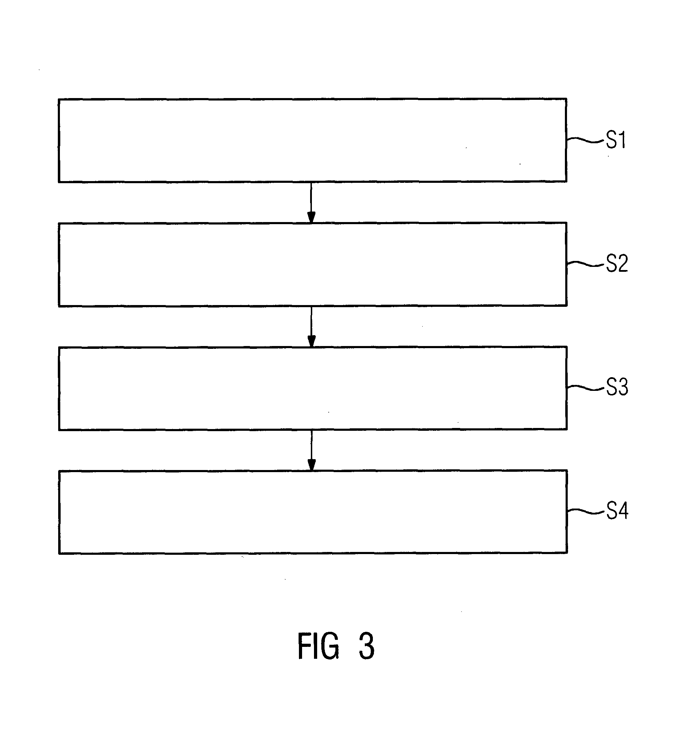

Figur 3 ist ein Flussdiagramm eines Verfahrens nach Ausführungsformen der Erfindung. In einem ersten Schritt S1 werden mehrere Tunnel durch die Leitsystemkomponente zu Netzwerkgeräten eines Teilnetzwerks des Automatisierungsnetzwerks eingerichtet. Jeder Tunnel hat einen ersten Endpunkt in der Leitsystemkomponente und einen zweiten Endpunkt in genau einem der Netzwerkgeräte.

In einem zweiten Schritt S2 wird jedem Tunnel ein an diesem Tunnel angeschlossenes Netzwerkgerät zugeordnet. Dies geschieht unter Verwendung zumindest einer Adresse dieses Netzwerkgeräts. Die Adresse kann beispielsweise eine IP- oder eine MAC-Adresse sein. Somit ist also eindeutig festgelegt, über welchen Tunnel die Leitsystemkomponente Daten senden muss, damit ein bestimmtes Gerät diese Daten empfangen kann. Außerdem ist festgelegt, über welchen Tunnel die Leitsystemkomponente Daten von welchem Netzwerkgerät empfangen kann.

In einem dritten Schritt S3 empfängt die Leitsystemkomponente Daten mittels eines ersten Protokolls innerhalb einer Datenstruktur des ersten Protokolls durch die eingerichteten Tunnel. Das erste Protokoll erlaubt ein Routing der Daten im Automatisierungsnetzwerk. Die Daten an sich erlauben kein Routing innerhalb des Automatisierungsnetzwerks, da es sich beispielsweise um Daten eines Protokolls der zweiten Schicht des OSI-Schichtmodells handelt. Es können also Daten über mehrere Tunnel empfangen werden, wobei jeder Tunnel einem Netzwerk zugeordnet ist, und wobei es sich um nicht routingfähige Daten handelt.

In einem vierten Schritt S4 werden die Daten aus der Datenstruktur entpackt. Die Daten sind dann also durch die Leitsystemkomponente lesbar.

### Liste der Bezugszeichen

- 100: Leitsystemkomponente
- 102: Steuerungseinheit
- 104: Netzwerkknoten
- 200: Prozessor
- 202: Speicher
- 204: Programminstruktionen
- 206: Netzwerkanschluss

## Patentansprüche

1. Verfahren zum Empfang von Daten durch eine Leitsystemkomponente (100), die einer Steuerung und Kontrolle eines Produktionsprozesses in einem Automatisierungsnetzwerk dient, wobei das Verfahren die folgenden Schritte umfasst:
- Einrichtung (S1) mehrerer Tunnel zu Netzwerkgeräten eines Teilnetzwerks des Automatisierungsnetzwerks in der Leitsystemkomponente (100), wobei jeder Tunnel einen ersten Endpunkt in der Leitsystemkomponente (100) und einen zweiten Endpunkt in genau einem der Netzwerkgeräte umfasst,
- Zuordnung (S2) jedes Tunnels zu dem an diesen Tunnel angeschlossenen Netzwerkgerät unter Verwendung zumindest einer Adresse dieses Netzwerkgeräts,
- Empfang (S3) von Daten mittels eines ersten Protokolls innerhalb einer Datenstruktur des ersten Protokolls durch die Tunnel, wobei das erste Protokoll ein Routing der Daten in dem Automatisierungsnetzwerk ermöglicht,
- Entpacken (S4) der Daten aus der Datenstruktur, wobei die Daten nach dem Entpacken keine Routinginformationen für ein Routing in dem Netzwerk umfassen, wobei es sich bei den Daten um Daten eines zweiten Protokolls handelt und wobei das zweite Protokoll für eine Hochverfügbarkeitskommunikation, in welcher im Falle eines Ausfalls einer der Netzwerkgeräte die Funktionsweise des Automatisierungsnetzwerks nicht beeinträchtigt wird, innerhalb des Automatisierungsnetzwerks ausgebildet ist.

2. Verfahren nach Anspruch 1, wobei das zweite Protokoll ein Protokoll der zweiten Schicht des OSI-Schichtmodells ist.

3. Verfahren nach einem der vorhergehenden Ansprüche, wobei das Netzwerkgerät eine Steuerungseinheit (102) des Automatisierungsnetzwerks ist, wobei die Steuerungseinheit (102) einen Produktionsprozess steuert, wobei der Produktionsprozess durch weitere Netzwerkgeräte des Automatisierungsnetzwerks durchgeführt wird, wobei die Steuerungseinheit (102) mehrere Endpunkte mehrerer Tunnel des Teilnetzwerks zu den weiteren Netzwerkgeräten einrichtet, und wobei die Steuerungseinheit (102) jedem dieser Tunnel das jeweils an diesen Tunnel angeschlossene Netzwerkgerät unter Verwendung zumindest einer Adresse dieses Netzwerkgeräts zuordnet.

4. Verfahren nach einem der vorhergehenden Ansprüche, wobei das erste Protokoll ein Internetprotokoll ist, wobei die Datenstruktur Datenpakete umfasst, wobei die Daten aus den Datenpaketen entpackt werden, und wobei die Adresse eine IP-Adresse und/oder eine MAC-Adresse des Netzwerkgeräts umfasst.

5. Verfahren nach einem der vorhergehenden Ansprüche, wobei das Automatisierungsnetzwerk weitere Leitsystemkomponenten (100) umfasst, und wobei jede der Leitsystemkomponenten (100) mehrere Endpunkte mehrerer Tunnel des Teilnetzwerks einrichtet und jedem der Tunnel jeweils eine an diesen Tunnel angeschlossene Leitsystemkomponente (100) unter Verwendung zumindest einer Adresse dieser Leitsystemkomponente (100) zuordnet.

6. Leitsystemkomponente (100), die einer Steuerung und Kontrolle eines Produktionsprozesses in einem Automatisierungsnetzwerk dient, mit:
- Mitteln (200; 204) zur Einrichtung mehrerer Tunnel zu Netzwerkgeräten eines Teilnetzwerks des Automatisierungsnetzwerks, wobei jeder Tunnel einen ersten Endpunkt in der Leitsystemkomponente (100) und einen zweiten Endpunkt in genau einem der Netzwerkgeräte umfasst,
- Mitteln (200; 204) zur Zuordnung jedes Tunnels zu dem an diesen Tunnel angeschlossenen Netzwerkgerät unter Verwendung zumindest einer Adresse dieses Netzwerkgeräts,
- Mitteln (206) zum Empfang von Daten mittels eines ersten Protokolls innerhalb einer Datenstruktur des ersten Protokolls durch die Tunnel, wobei das erste Protokoll ein Routing der Daten in dem Netzwerk ermöglicht,
- Mitteln (200; 204) zum Entpacken der Daten aus der Datenstruktur, wobei die Daten nach dem Entpacken keine Routinginformationen für ein Routing in dem Netzwerk umfassen, wobei es sich bei den Daten um Daten eines zweiten Protokolls handelt und wobei das zweite Protokoll für eine Hochverfügbarkeitskommunikation, in welcher im Falle eines Ausfalls einer der Netzwerkgeräte die Funktionsweise des Automatisierungsnetzwerks nicht beeinträchtigt wird, innerhalb des Automatisierungsnetzwerks ausgebildet ist.

7. Automatisierungsnetzwerk mit zumindest einer Leitsystemkomponente (100) nach Anspruch 6.

8. Computerprogrammprodukt (202) mit durch eine Leitsystemkomponente (100) nach Anspruch 7 ausführbaren Instruktionen (204), wobei die Instruktionen die Leitsystemkomponente (100) zur Durchführung eines Verfahrens nach einem der Ansprüche 1-6 veranlassen

## Claims

1. Method for receiving data by means of a control system component (100) which is used to control and monitor a production process in an automation network, the method comprising the following steps of:
- setting up (S1) a plurality of tunnels to network devices of a subnetwork of the automation network in the control system component (100), each tunnel comprising a first end point in the control system component (100) and a second end point in precisely one of the network devices,
- assigning (S2) each tunnel to the network device connected to this tunnel using at least one address of this network device,
- receiving (S3) data using a first protocol within a data structure of the first protocol through the tunnels, the first protocol making it possible to route the data in the automation network,
- unpacking (S4) the data from the data structure, the data not comprising any routing information for routing in the network after unpacking, the data being data of a second protocol, and the second protocol being designed for high-availability communication, in which the method of operation of the automation network is not impaired in the event of failure of one of the network devices, within the automation network.

2. Method according to Claim 1, the second protocol being a protocol of the second layer of the OSI layer model.

3. Method according to one of the preceding claims, the network device being a control unit (102) of the automation network, the control unit (102) controlling a production process, the production process being carried out by further network devices of the automation network, the control unit (102) setting up a plurality of end points of a plurality of tunnels of the subnetwork to the further network devices, and the control unit (102) assigning, to each of these tunnels, the network device respectively connected to this tunnel using at least one address of this network device.

4. Method according to one of the preceding claims, the first protocol being an Internet protocol, the data structure comprising data packets, the data being unpacked from the data packets, and the address comprising an IP address and/or a MAC address of the network device.

5. Method according to one of the preceding claims, the automation network comprising further control system components (100), and each of the control system components (100) setting up a plurality of end points of a plurality of tunnels of the subnetwork and assigning, to each of the tunnels, a control system component (100) respectively connected to this tunnel using at least one address of this control system component (100).

6. Control system component (100) which is used to control and monitor a production process in an automation network, having:
- means (200; 204) for setting up a plurality of tunnels to network devices of a subnetwork of the automation network, each tunnel comprising a first end point in the control system component (100) and a second end point in precisely one of the network devices,
- means (200; 204) for assigning each tunnel to the network device connected to this tunnel using at least one address of this network device,
- means (206) for receiving data using a first protocol within a data structure of the first protocol through the tunnels, the first protocol making it possible to route the data in the network,
- means (200; 204) for unpacking the data from the data structure, the data not comprising any routing information for routing in the network after unpacking, the data being data of a second protocol, and the second protocol being designed for high-availability communication, in which the method of operation of the automation network is not impaired in the event of failure of one of the network devices, within the automation network.

7. Automation network having at least one control system component (100) according to Claim 6.

8. Computer program product (202) having instructions (204) which can be executed by a control system component (100) according to Claim 7, the instructions causing the control system component (100) to carry out a method according to one of Claims 1-6.

## Revendications

1. Procédé de réception de données par un composant ( 100 ) d'un système de conduite, qui sert à commander et à contrôler une opération de production dans un réseau d'automatisation, le procédé comprenant les stades suivants :
- établissement ( S1 ) de plusieurs tunnels allant à des appareils de réseau d'un sous-réseau du réseau d'automatisation dans le composant ( 100 ) du système de conduite, chaque tunnel comprenant un premier point d'extrémité dans le composant ( 100 ) du système de conduite et un deuxième point d'extrémité dans exactement l'un des appareils du réseau,
- affectation ( S2 ) de chaque tunnel à l'appareil du réseau raccordé à ce tunnel, en utilisant au moins une adresse de cet appareil du réseau,
- réception ( S3 ) par le tunnel de données au moyen d'un premier protocole au sein d'une structure de données du premier protocole, le premier protocole rendant possible un acheminement des données dans le réseau d'automatisation,
- décompression ( S4 ) des données de la structure de données, les données après la décompression ne comprenant pas d'informations d'acheminement dans le réseau, les données étant des données d'un deuxième protocole et le deuxième protocole étant constitué au sein du réseau d'automatisation pour une communication de grande disponibilité dans laquelle, dans le cas d'une défaillance de l'un des appareils du réseau, il n'est pas porté atteinte à la façon de fonctionner du réseau d'automatisation.

2. Procédé suivant la revendication 1, dans lequel le deuxième protocole est un protocole de la deuxième couche du modèle de couche OSI.

3. Procédé suivant l'une des revendications précédentes, dans lequel l'appareil du réseau est une unité ( 102 ) de commande du réseau d'automatisation, l'unité ( 102 ) de commande commandant une opération de production, l'opération de production étant effectuée par d'autres appareils du réseau d'automatisation, l'unité ( 102 ) de commande établissant plusieurs points d'extrémité de plusieurs tunnels du sous-réseau allant aux autres appareils du réseau et l'unité ( 102 ) de commande affectant, à chacun de ces tunnels, l'appareil de réseau raccordé respectivement à ce tunnel, en utilisant au moins une adresse de cet appareil de réseau.

4. Procédé suivant l'une des revendications précédentes, dans lequel le premier protocole est un protocole Internet, la structure de données comprenant des paquets de données, les données étant décompressées des paquets de données et l'adresse comprenant une adresse IP et/ou une adresse MAC de l'appareil du réseau.

5. Procédé suivant l'une des revendications précédentes, dans lequel le réseau d'automatisation comprend d'autres composants ( 100 ) du système de conduite et dans lequel chacun des composants ( 100 ) du système de conduite établit plusieurs points d'extrémité de plusieurs tunnels du sous-réseau et affecte à chacun des tunnels, respectivement un composant ( 100 ) du système de conduite raccordé à ce tunnel, en utilisant au moins une adresse de ce composant ( 100 ) du système de conduite.

6. Composant ( 100 ) de système de conduite, qui sert à commander et à contrôler une opération de production dans un réseau d'automatisation, comprenant :
- des moyens ( 200 ; 204 ) d'établissement de plusieurs tunnels allant aux appareils de réseau d'un sous-réseau du réseau d'automatisation, chaque tunnel comprenant un premier point d'extrémité dans le composant ( 100 ) du système de conduite et un deuxième point d'extrémité dans exactement l'un des appareils du réseau,
- des moyens ( 200 ; 204 ) d'affectation de chaque tunnel à l'appareil de réseau raccordé à ce tunnel, en utilisant au moins une adresse de cet appareil du réseau,
- des moyens ( 206 ) de réception par le tunnel de données au moyen d'un premier protocole au sein d'une structure de données du premier protocole, le premier protocole rendant possible un acheminement de données dans le réseau,
- des moyens ( 200 ; 204 ) de décompression des données de la structure de données, les données ne comprenant pas, après la décompression, d'informations d'acheminement dans le réseau, les données étant des données d'un deuxième protocole et le deuxième protocole étant constitué au sein du réseau d'automatisation pour une communication de grande disponibilité dans laquelle, dans le cas d'une défaillance de l'un des appareils du réseau, il n'est pas porté atteinte à la façon de fonctionner du réseau d'automatisation.

7. Réseau d'automatisation comprenant au moins un composant ( 100 ) de système de conduite suivant la revendication 6.

8. Produit ( 202 ) de programme d'ordinateur ayant des instructions ( 204 ) pouvant être exécutées par un composant ( 100 ) de système de conduite suivant la revendication 7, les instructions faisant que le composant ( 100 ) du système de conduite effectue un procédé suivant l'une des revendications 1 à 6.
